# EUROPEAN PATENT SPECIFICATION

(11) **EP 3 549 855 B1**
(45) Date of publication and mention of the grant of the patent: **03.08.2022**
(21) Application number: 17893081.4
(22) Date of filing: 20.11.2017
(51) Int. Cl.: B64C 3/38, B64C 3/26, B64C 1/12, B32B 3/28, B64C 3/44

(54) **SHAPE MEMORY MORPHING MEMBER USING KIRIGAMI PATTERN**
FORMSPEICHERNDES MORPHING-ELEMENT MIT KIRIGAMI-MUSTER
ÉLÉMENT DE MORPHAGE À MÉMOIRE DE FORME UTILISANT UN MOTIF DE KIRIGAMI

(30) Priority: 17.01.2017 KR 20170007921
(43) Date of publication of application: 09.10.2019
(73) Proprietor: Industry-University Cooperation Foundation Korea Aerospace University, Goyang-si, Gyeonggi-do 10540 (KR)
(72) Inventor: ROH, Jin Ho, Seoul 06276 (KR); KWON, O Hyun, Gimpo-si Gyeonggi-do 10097 (KR); AHN, Min Su, Suwon-si Gyeonggi-do 16628 (KR)
(74) Representative: Manitz Finsterwald Patent- und Rechtsanwaltspartnerschaft mbB
(86) International application number: PCT/KR2017/013200
(87) International publication number: WO 2018/135739

(56) References cited:
- WO-A2-03/018853
- JP-A- 2012 517 922
- US-A1- 2011 300 358
- US-B1- 6 182 929
- US-B1- 7 678 440
- US-B2- 7 931 240
- NEVILLE R M ET AL: "Development of shape morphing Kirigami honeycombs and actuation methods", INTERNET CITATION, 24 July 2015 (2015-07-24), XP002796476, Retrieved from the Internet: URL:https://www.researchgate.net/publicati on/296333505_Development_of_shape_morphing _Kirigami_honeycombs_and_actuation_methods [retrieved on 2019-12-13]
- ROBIN M. NEVILLE ET AL: "Shape morphing Kirigami mechanical metamaterials", SCIENTIFIC REPORTS, vol. 6, no. 1, 5 August 2016 (2016-08-05), pages 1-11, XP055504831, DOI: 10.1038/srep31067
- NEVILLE ET AL.: 'Shape Morphing Kirigami Mechanical Metamaterials' SCIENTIFIC REPORTS 6 vol. 6, no. 1, 05 August 2016, pages 1 - 11, XP055504831

## Description

### [Technical Field]

The present application relates to a shape memory morphing member using a kirigami pattern.

### [Background Art]

Researches on variable shape aircrafts, that is morphing aircraft structures (MAS), are being actively conducted to improve efficiency of the aircrafts and meet various operating conditions. For example, researches on air foils of morphing wings having variable shapes are being actively conducted.

In this regard, technologies for mechanically deforming shapes of wings of the aircrafts in the related art have been proposed. However, the proposed technology has a problem in that a large amount of energy is required, and a structure is complicated because the shape is mechanically deformed.

The background art of the present application is disclosed in Korean Patent No. 10-1271485 (registered on May 30, 2013).

WO 03/018853 A2 discloses a structure making use of a sandwiched configuration with active members formed from a shape memory material and a core, for example formed by corrugated sheets, which is sandwiched by the active members and adaptive for deformation.

US 7,678,440 B1 discloses deformable variable-stiffness cellular structures, particularly formed as honeycombs, with a constant stiffness core material and outer material of variable stiffness for cell walls. The cells are sandwiched by an outer skin covering material, for example a thin shape memory polymer.

### [Disclosure]

### [Technical Problem]

The present application has been made in an effort to solve the problem in the related art, and an object of the present application is to provide a shape memory morphing member using a kirigami pattern which may be deformed in shape without the aid of a separate mechanical operator and may have a structurally simple configuration and high rigidity.

However, technical problems to be solved by the exemplary embodiment of the present application are not limited to the aforementioned technical problem, and other technical problems may be present.

### [Technical Solution]

As a technical means for solving the above-mentioned technical problem, a shape memory morphing member using a kirigami pattern according to one aspect of the present application extends in a length direction and a width direction and includes: an upper shape memory polymer (SMP) skin layer extending in the length direction and the width direction; a lower SMP skin layer which is disposed below the upper SMP skin layer and extends in the length direction and the width direction; and a core which is interposed between the upper SMP skin layer and the lower SMP skin layer and has a kirigami pattern structure arranged in the length direction and the width direction of the morphing member, in which the upper SMP skin layer and the lower SMP skin layer have a restoring force that restores the upper SMP skin layer and the lower SMP skin layer to initial shapes in a first state at a higher temperature than a predetermined temperature, the upper SMP skin layer and the lower SMP skin layer have a degree of freedom of deformation corresponding to an external force to be combined with the restoring force, and the shapes of the upper SMP skin layer and the lower SMP skin layer in the first state before switching to a second state are maintained in the second state at a lower temperature than the predetermined temperature. The kirigami pattern structure includes multiple kirigami pattern rows which extend while being bent multiple times and have crests and troughs alternately formed in the width direction, and one of the multiple kirigami pattern rows is formed such that a crest part of the one of the multiple kirigami pattern rows is hingedly coupled to a crest part of another kirigami pattern row which is adjacent to the one of the multiple kirigami pattern rows in one direction of the length direction, and a trough part of the one of the multiple kirigami pattern rows is hingedly coupled to a trough part of another kirigami pattern row which is adjacent to the one of the multiple kirigami pattern rows in the other direction of the length direction.

The technical solution is just illustrative but should not be interpreted as being intended to limit the present application. In addition to the above-mentioned exemplary embodiment, additional exemplary embodiments may be present in the drawings and the detailed description of the invention.

### [Advantageous Effects]

According to the above-mentioned technical solution of the present application, there is provided the sandwich structure in which the core having the kirigami pattern structure is interposed between the upper SMP skin layer and the lower SMP skin layer, such that it is possible to implement the shape memory morphing member which may be easily deformed in shape in the first state without the aid of a separate mechanical operator and may have a structurally simple configuration and high rigidity (bending rigidity) in the second state as the sandwich structure integrally behaves.

### [Description of Drawings]

FIG. 1 is a schematic perspective view of a shape memory morphing member using a kirigami pattern according to an exemplary embodiment of the present application.
FIG. 2 is a schematic perspective enlarged view of a core illustrated in FIG. 1.
FIG. 3 is a schematic perspective view for explaining a state in which the core of the shape memory morphing member using a kirigami pattern according to the exemplary embodiment of the present application is stretched in a length direction.
FIG. 4 is a schematic perspective view for explaining a state in which the core of the shape memory morphing member using a kirigami pattern according to the exemplary embodiment of the present application is deformed by being bent.
FIG. 5 is a schematic perspective view illustrating a state in which the shape memory morphing member using a kirigami pattern according to the exemplary embodiment of the present application illustrated in FIG. 1 is deformed in a length direction.
FIG. 6 is a schematic perspective view illustrating a state in which the shape memory morphing member using a kirigami pattern according to the exemplary embodiment of the present application illustrated in FIG. 1 is deformed in a width direction.
FIG. 7 is a schematic perspective view illustrating a state in which the shape memory morphing member using a kirigami pattern according to the exemplary embodiment of the present application illustrated in FIG. 1 is deformed by being bent.
FIG. 8 is a schematic cross-sectional view of the shape memory morphing member using a kirigami pattern according to the exemplary embodiment of the present application.
FIG. 9 is a schematic cross-sectional view for explaining a state in which an upper SMP skin layer and a lower SMP skin layer are stacked.

### [Best Mode]

Hereinafter, exemplary embodiments of the present application will be described in detail with reference to the accompanying drawings so that those with ordinary skill in the art to which the present application pertains may easily carry out the exemplary embodiments. However, the present application may be implemented in various different ways and is not limited to the exemplary embodiments described herein. A part irrelevant to the description will be omitted in the drawings in order to clearly describe the present application, and similar constituent elements will be designated by similar reference numerals throughout the specification.

Throughout the specification, when one constituent element is referred to as being "connected to" another constituent element, one constituent element can be "directly connected to" the other constituent element, and one constituent element can also be "electrically connected to" the other element with other elements therebetween.

Throughout the specification, when one member is disposed "on", "at an upper side of', "at an upper end of', "below", "at a lower side of', or "at a lower end of' another member in the present specification of the present application, this includes not only a case where the one member is brought into contact with another member, but also a case where still another member is present between the two members.

Throughout the specification of the present application, unless explicitly described to the contrary, the word "comprise" or "include" and variations, such as "comprises", "comprising", "includes" or "including", will be understood to imply the inclusion of stated constituent elements, not the exclusion of any other constituent elements.

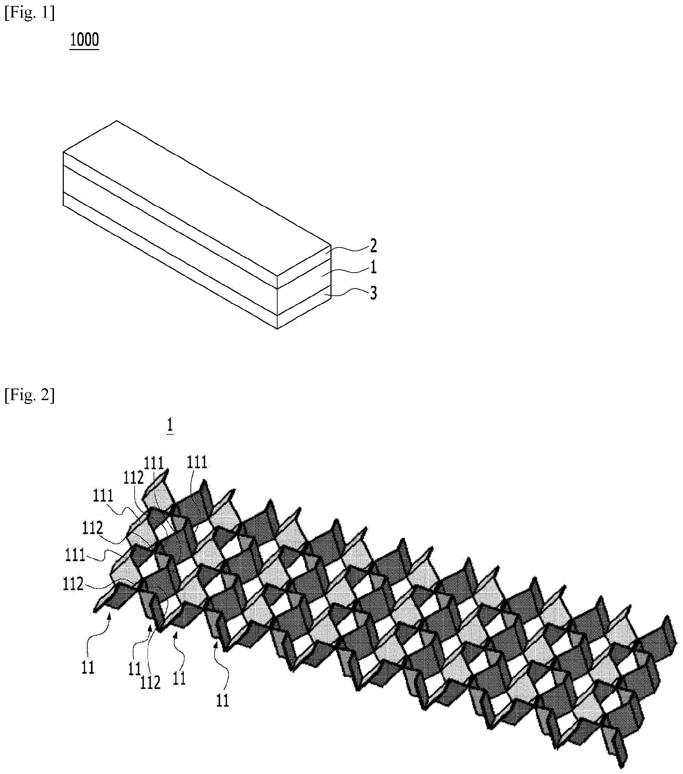

For reference, the terms (an upper side, a lower side, etc.) relevant to the direction or the position in the exemplary embodiment of the present application are set based on the arranged states of the respective components illustrated in the drawings. For example, when viewed from FIG. 2, a side generally positioned in the direction of 12 o'clock may be set to the upper side, and a side generally positioned in the direction of 6 o'clock may be set to the lower side.

The present application relates to a shape memory morphing member using a kirigami pattern.

Hereinafter, a shape memory morphing member 1000 using a kirigami pattern (hereinafter, referred to as 'the present morphing member') according to an exemplary embodiment of the present application will be described.

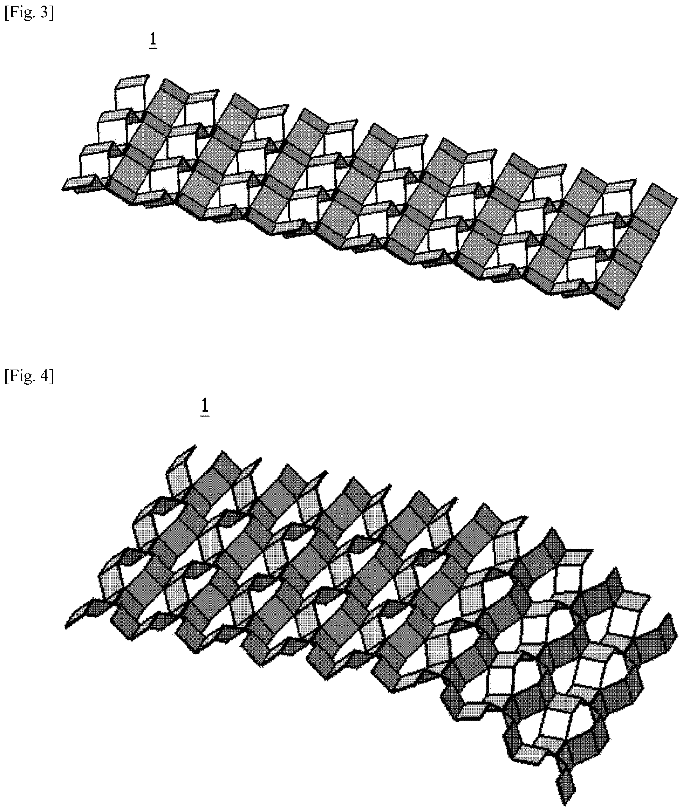

FIG. 1 is a schematic perspective view of the present morphing member, FIG. 2 is a schematic perspective enlarged view of a core illustrated in FIG. 1, FIG. 3 is a schematic perspective view for explaining a state in which the core of the present morphing member is stretched in a length direction, and FIG. 4 is a schematic perspective view for explaining a state in which the core of the present morphing member is deformed by being bent.

Referring to FIG. 1, the present morphing member 1000 includes a core 1. Referring to FIG. 2, the core 1 has a kirigami pattern structure arranged in a length direction and a width direction. For reference, the length direction may be a direction of 10 o'clock to a direction of 4 o'clock based on FIGS. 2 and 3, and the width direction may be a direction of 1 o'clock to a direction of 7 o'clock based on FIGS. 2 and 3.

When comparing and referring to FIGS. 2, 3, and 4, the kirigami pattern structure may be a structure having a degree of freedom in respect to bending deformation, length directional deformation, and width directional deformation.

Here, the length directional deformation may mean that the core 1 is stretched (e.g., FIG. 3 illustrates a relatively stretched state in comparison with FIG. 2) or shrunk (e.g., FIG. 2 illustrates a relatively shrunk state in comparison with FIG. 3) in the length direction. In addition, the width directional deformation may mean that the core 1 is stretched or shrunk in the width direction. In addition, the kirigami pattern structure having the degree of freedom in respect to the bending deformation, the length directional deformation, and the width directional deformation may mean that the kirigami pattern structure may be deformed by being bent, deformed in the length direction, and deformed in the width direction within a predetermined range in which the kirigami pattern structure may be stretched, shrunk, or bent. As an example, referring to FIGS. 2 and 3, the kirigami pattern structure may be stretched within a range in which the kirigami pattern structure may be spread.

The core 1 having the kirigami pattern structure may be deformed in shape by being easily bent upward and downward and may be freely stretched or shrunk in the length direction and the width direction.

As an example, referring to FIG. 2, the kirigami pattern structure may include multiple kirigami pattern rows 11 which extend by being bent multiple times and have crests 111 and troughs 112 which are alternately formed in the width direction.

In addition, referring to FIG. 2, one of the multiple kirigami pattern rows 11 may be formed such that a crest part 111 of the one of the multiple kirigami pattern rows may be hingedly coupled to a crest part 111 of another kirigami pattern row 11 which is adjacent to the one of the multiple kirigami pattern rows in one direction of the length direction, and a trough part 112 of the one of the multiple kirigami pattern rows 11 may be hingedly coupled to a trough part 112 of another kirigami pattern row 11 which is adjacent to the one of the multiple kirigami pattern rows 11 in the other direction of the length direction.

When comparing FIGS. 2 and 3, with this kirigami pattern structure, the core 1 may be deformed in the length direction without being deformed in the width direction. In addition, when comparing FIGS. 2 and 4, the core 1 may be easily deformed by being bent.

In addition, referring to FIG. 1, the present morphing member 1000 includes an upper shape memory polymer (SMP) skin layer 2. In addition, the present morphing member 1000 includes a lower SMP skin layer 3 disposed below the upper SMP skin layer 2. The core 1 is interposed between the upper SMP skin layer 2 and the lower SMP skin layer 3.

The upper SMP skin layer 2, the core 1, and the lower SMP skin layer 3 may constitute an integrated sandwich structure. For example, the present morphing member may be manufactured by attaching the core 1 having the kirigami pattern to each of the upper SMP skin layer 2 and the lower SMP skin layer 3 which are surface plates made of SMP thin film materials.

The upper SMP skin layer 2 and the lower SMP skin layer 3 may have a restoring force that restores the upper SMP skin layer 2 and the lower SMP skin layer 3 to initial shapes in a first state at a higher temperature than a predetermined temperature Tg, and the upper SMP skin layer 2 and the lower SMP skin layer 3 may have a degree of freedom of deformation corresponding to an external force to be combined with the restoring force.

Specifically, the SMP has a property of being flexible at a particular temperature Tg or higher (heat softenable materials) and has a property of memorizing the shape thereof before deformation and being restored. Therefore, the upper SMP skin layer 2 and the lower SMP skin layer 3 may become flexible and deformable in the first state, and the upper SMP skin layer 2 and the lower SMP skin layer 3 may be restored or deformed in shape in the first state in accordance with a combination of the restoring force and the external force applied to the upper SMP skin layer 2 and the lower SMP skin layer 3.

As an example, the upper and lower SMP skin layers 2 and 3 may be restored to the shapes before deformation in a case in which no separate external force is applied in the first state except for the restoring force that restores the upper SMP skin layer 2 and the lower SMP skin layer 3 to the shapes before deformation.

In addition, the upper SMP skin layer 2 and the lower SMP skin layer 3 may become flexible and deformable in the first state, such that when the external force is applied in the first state, the upper SMP skin layer 2 and the lower SMP skin layer 3 may be deformed in shape in accordance with the combination of the external force and the restoring force. For example, in a case in which the external force, which stretches the upper SMP skin layer 2 and the lower SMP skin layer 3 in the length direction, is higher than the restoring force when the restoring force, which shrinks the upper SMP skin layer 2 and the lower SMP skin layer 3 in the length direction, is applied in the first state, the upper SMP skin layer 2 and the lower SMP skin layer 3 may be deformed by being stretched in the length direction corresponding to an external tensile force having a magnitude made by subtracting the restoring force from the external force. As another example, in a case in which the restoring force is applied in the length direction and the external force is applied in a bending direction in the first state, the upper SMP skin layer 2 and the lower SMP skin layer 3 may be deformed in shape in accordance with a vector direction and a magnitude of the combination of the restoring force and the external force.

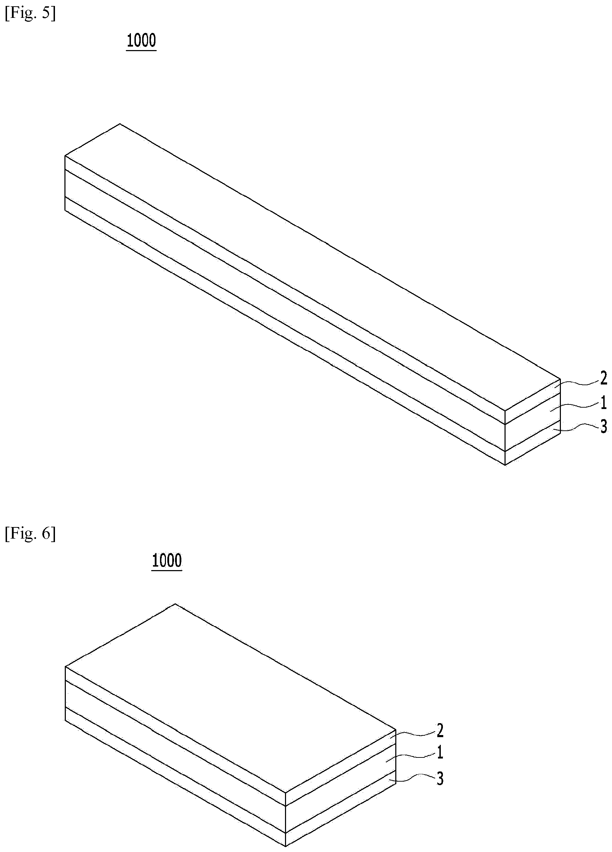

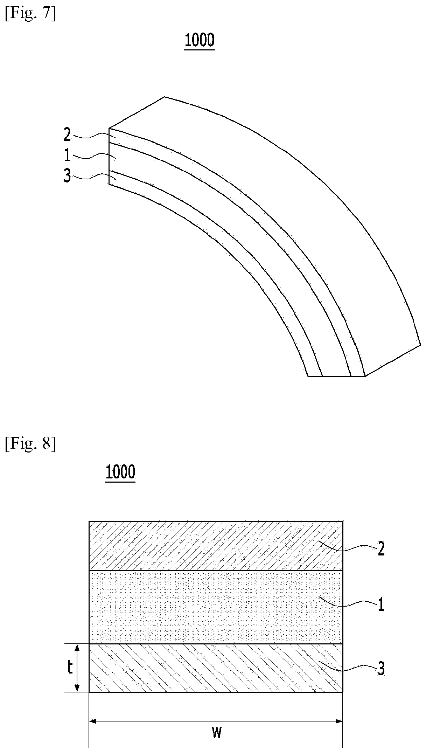

FIG. 5 is a schematic perspective view illustrating a state in which the present morphing member illustrated in FIG. 1 is deformed in the length direction, FIG. 6 is a schematic perspective view illustrating a state in which the present morphing member illustrated in FIG. 1 is deformed in the width direction, and FIG. 7 is a schematic perspective view illustrating a state in which the present morphing member illustrated in FIG. 1 is deformed by being bent. For reference, the core is schematically illustrated in FIGS. 5 to 7.

As described above, the core 1 has the kirigami pattern structure having the degree of freedom in respect to the bending deformation, the length directional deformation, and the width directional deformation. Therefore, when comparing FIG. 1 with FIGS. 5 to 7, the core 1 may be deformed in the first state by the kirigami pattern structure in conjunction with the deformation of the upper SMP skin layer 2 and the deformation of the lower SMP skin layer 3. Therefore, the present morphing member 1000 may be deformed in the length direction, deformed in the width direction, and deformed by being bent in the first state.

Therefore, when comparing FIGS. 1 and FIG. 5, with the kirigami pattern structure in the first state, it is possible to implement a zero-Poisson's ratio at which the present morphing member 1000 is deformed by being stretched in the length direction without being deformed in the width direction. In addition, with the kirigami pattern structure in the first state, it is possible to implement a negative-Poisson's ratio at which the present morphing member 1000 is deformed by being stretched in both the width direction and the length direction.

In addition, when comparing FIGS. 1 and 6, the present morphing member 1000 may be deformed in the width direction in the first state. In addition, when comparing FIGS. 1 and 7, the present morphing member 1000 may be deformed by being bent in the first state. As described above, in the first state, the present morphing member 1000 may be subjected to one or more of the length directional deformation, the width directional deformation, and the bending deformation.

As described above, when the temperature of the upper and lower SMP skin layers 2 and 3 is increased and the upper and lower SMP skin layers 2 and 3 come into the first state, the present morphing member 1000 may be deformed in shape in accordance with the combination of the restoring force and the external force applied to the present morphing member 1000. The present morphing member 1000 has a property of being restored to the memorized shape in the first state by the upper SMP skin layer 2 and the lower SMP skin layer 3, and as a result, the present morphing member 1000 may be restored to the memorized shape when no external force is applied.

In addition, when the temperature of the upper and lower SMP skin layers 2 and 3 is decreased and the upper and lower SMP skin layers 2 and 3 come into the second state, the present morphing member 1000 may maintain the shape thereof which is made immediately before the present morphing member 1000 comes into the second state (immediately before the present morphing member 1000 comes out of the first state).

Specifically, the shapes of the upper and lower SMP skin layers 2 and 3, which are made in the first state before switching to the second state, may be maintained in the second state at a lower temperature than the predetermined temperature.

Therefore, in the second state, the present morphing member 1000 may have bending rigidity formed as the upper SMP skin layer 2, the lower SMP skin layer 3, and the kirigami pattern structure are combined. The upper SMP skin layer 2 and the lower SMP skin layer 3 may be integrally coupled to the core 1 while constituting a sandwich structure, thereby restricting the deformation of the core 1 which is freely deformed (deformed by being bent, stretched, and shrunk) solely (independently) within a predetermined range. Further, in the second state, the present morphing member 1000 may have the structure having high bending rigidity (bending stiffness) by the coupling relationship between the upper SMP skin layer 2, the lower SMP skin layer 3, and the core 1. The present morphing member 1000 may provide a rigid truss structure as the deformation of the upper and lower portions of the core, which is freely deformed in the second state, is restricted.

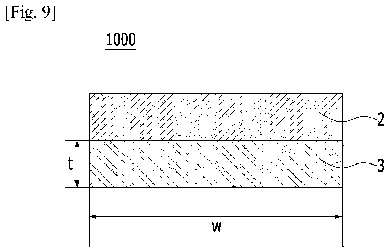

FIG. 8 is a schematic cross-sectional view of the present morphing member, and FIG. 9 is a schematic cross-sectional view for explaining a state in which the upper SMP skin layer and the lower SMP skin layer are stacked.

Referring to FIG. 8, as described above, since the present morphing member 1000 has a structure in which the core 1, the upper SMP skin layer 2, and the lower SMP skin layer 3 are disposed in a sandwich structure, the present morphing member 1000 may effectively support a bending load and may have high rigidity.

For example, when comparing the present morphing member 1000 *(see* FIG. 8) with a structure *(see* FIG. 9) having only the upper and lower SMP skin layers 2 and 3 except for the core 1, and assuming that the upper SMP skin layers and the lower SMP skin layers have the same thickness t and the same width w, bending rigidity of the present morphing member 1000 *(see* FIG. 8) is much higher, by the core 1, than bending rigidity of the structure *(see* FIG. 9) having only the upper SMP skin layer 2 and the lower SMP skin layer 3.

In summary, since the present morphing member 1000 includes the upper SMP skin layer 2, the lower SMP skin layer 3, and the core 1 having the kirigami pattern structure, the present morphing member 1000 may be easily deformed to other shapes in the first state (one or more of the bending deform, the length directional deformation, and an axial deformation). In addition, the shape of the present morphing member 1000, which is formed in the first state before switching to the second state, may be maintained in the second state formed by decreasing the temperatures of the upper SMP skin layer 2 and the lower SMP skin layer 3 to a predetermined temperature or lower.

The present morphing member 1000 may be continuously deformed by the deformation of the kirigami pattern rows. In addition, in accordance with a degree to which the hinges of the kirigami pattern structure are bent, the present morphing member 1000 may have the zero-Poisson's ratio at which the length of the present morphing member 1000 is increased in the length direction, the negative-Poisson's ratio at which the present morphing member 1000 is stretched in both the length direction and the width direction, and the morphing properties. In addition, since no separate operator is required to deform the present morphing member 1000 unlike the related art, the present morphing member 1000 may have a simple configuration. In addition, with the kirigami pattern structure, it is easy to deform the shape of the present morphing member 1000 and increase or decrease a volume of the present morphing member 1000. In addition, the present morphing member 1000 may support a predetermined load or higher.

In addition, the present morphing member 1000 may be continuously deformed in shape. In addition, the present morphing member 1000 may be deformed in shape in all three-axial directions. In addition, the present morphing member 1000 may be deformed in shape simply by a change in temperature of the upper and lower SMP skin layers 2 and 3 without an additional operator such as a wire. Therefore, the present morphing member 1000 may be deformed in shape with low electric power in comparison with the related art. In addition, since the present morphing member 1000 has the sandwich structure having the upper and lower SMP skin layers 2 and 3, the present morphing member 1000 may be easily deformed in shape in the first state and may have high rigidity in the second state.

In addition, the present morphing member 1000 may include an electric conductor installed to increase or decrease the temperature of the upper SMP skin layer 2 and the temperature of the lower SMP skin layer 3. The temperature of the upper SMP skin layer 2 and the temperature of the lower SMP skin layer 3 may be increased or decreased by the electric conductor, such that the first state or the second state may be made.

As an example, the electric conductor may be disposed on an inner surface of the upper SMP skin layer 2 and an inner surface of the lower SMP skin layer 3. Here, the inner surface of the upper SMP skin layer 2 may mean a surface (lower surface based on the drawings) of the upper SMP skin layer 2 that faces the core 1. In addition, the inner surface of the lower SMP skin layer 3 may mean a surface (upper surface based on the drawings) of the lower SMP skin layer 3 that faces the core 1. Alternatively, the electric conductor may be disposed inside the upper SMP skin layer 2 and inside the lower SMP skin layer 3.

In addition, as another exemplary embodiment, the present morphing member 1000 may include a convection device that transfers gas by convection to the peripheries of the upper SMP skin layer 2 and the lower SMP skin layer 3 in order to increase or decrease the temperature of the upper SMP skin layer 2 and the temperature of the lower SMP skin layer 3. The convection device may adjust a temperature of the gas in accordance with the first state and the second state.

That is, regarding the present morphing member 1000, a method installing (attaching) the electric conductor or using the convection of outside air may be used as a method of increasing or decreasing the temperature of the upper SMP skin layer 2 and the temperature of the lower SMP skin layer 3.

In addition, the present application may provide a morphing wing including the morphing member 1000 according to the exemplary embodiment of the present application. Therefore, it is possible to implement the morphing wing having an air foil of which the shape is easily changed, and to implement an aircraft including the morphing wing. When the morphing wing is applied to the aircraft, it is possible to implement the aircraft that may be operated during extended flight times with low electric power in comparison with an aircraft in the related art.

In addition, the present application may provide a skin of the aircraft that includes the morphing member 1000 according to the exemplary embodiment of the present application. In general, the aircraft has multiple skins provided on the framework thereof to form a wing, a fuselage, or the like. The present morphing member 1000 may be applied to the skin. In addition, the present application may provide an aircraft including the morphing member 1000 according to the exemplary embodiment of the present application.

It will be appreciated that the exemplary embodiments of the present application have been described above for purposes of illustration, and those skilled in the art may understand that the present application may be easily modified in other specific forms without changing the technical features of the present application. Therefore, it should be understood that the above-described exemplary embodiments are illustrative in all aspects and do not limit the present application. For example, each component described as a single type may be carried out in a distributed manner. Likewise, components described as a distributed type can be carried out in a combined type.

The scope of the present application is represented by the claims to be described below rather than the detailed description.

## Claims

1. A shape memory morphing member (1000) using a kirigami pattern, the shape memory morphing member (1000) extending in a length direction and a width direction and comprising:
an upper shape memory polymer skin layer (2) extending in the length direction and the width direction;
a lower shape memory polymer skin layer (3) which is disposed below the upper shape memory polymer skin layer (2) and extends in the length direction and the width direction; and
a core (1) which is interposed between the upper shape memory polymer skin layer (2) and the lower shape memory polymer skin layer (3) and has a kirigami pattern structure arranged in the length direction and the width direction of the morphing member (1000), the kirigami pattern structure including multiple kirigami pattern rows (11) which extend in the width direction,
wherein the upper shape memory polymer skin layer (2) and the lower shape memory polymer skin layer (3) have a restoring force that restores the upper shape memory polymer skin layer (2) and the lower shape memory polymer skin layer (3) to initial shapes in a first state at a higher temperature than a predetermined temperature, the upper shape memory polymer skin layer (2) and the lower shape memory polymer skin layer (3) have a degree of freedom of deformation corresponding to an external force to be combined with the restoring force, and the shapes of the upper shape memory polymer skin layer (2) and the lower shape memory polymer skin layer (3) in the first state before switching to a second state are maintained in the second state at a lower temperature than the predetermined temperature,
**characterized in that** the kirigami pattern rows (11) extend while being bent multiple times and have crests (111) and troughs (112) alternately formed in the width direction, and one of the multiple kirigami pattern rows (11) is formed such that a crest part of the one of the multiple kirigami pattern rows (11) is hingedly coupled to a crest part of another kirigami pattern row (11) which is adjacent to the one of the multiple kirigami pattern rows (11) in one direction of the length direction, and a trough part of the one of the multiple kirigami pattern rows (11) is hingedly coupled to a trough part of another kirigami pattern row (11) which is adjacent to the one of the multiple kirigami pattern rows (11) in the other direction of the length direction.

2. The shape memory morphing member (1000) of claim 1, wherein the upper shape memory polymer skin layer (2), the core (1), and the lower shape memory polymer skin layer (3) constitute an integrated sandwich structure.

3. The shape memory morphing member (1000) of claim 1, wherein in the second state, the morphing member (1000) has bending rigidity formed as the upper shape memory polymer skin layer (2), the lower shape memory polymer skin layer (3), and the kirigami pattern structure are combined.

4. The shape memory morphing member (1000) of claim 1, wherein the kirigami pattern structure has a structure having a degree of freedom in respect to bending deformation, length directional deformation, and width directional deformation.

5. The shape memory morphing member (1000) of claim 1, wherein the kirigami pattern structure in the first state implements a zero-Poisson's ratio at which the morphing member (1000) is deformed by being stretched only in the length direction without being deformed in the width direction, and implements a negative-Poisson's ratio at which the morphing member (1000) is deformed by being stretched both in the width direction and the length direction.

6. The shape memory morphing member (1000) of claim 1, further comprising:
an electric conductor installed to increase or decrease a temperature of the upper shape memory polymer skin layer (2) and a temperature of the lower shape memory polymer skin layer (3).

7. The shape memory morphing member (1000) of claim 6, wherein the electric conductor is disposed on an inner surface of or inside the upper shape memory polymer skin layer (2) and on an inner surface of or inside the lower shape memory polymer skin layer (3).

8. The shape memory morphing member (1000) of claim 1, further comprising:
a convection device which transfers gas by convection to a periphery of the upper shape memory polymer skin layer (2) and a periphery of the lower shape memory polymer skin layer (3) to increase or decrease a temperature of the upper shape memory polymer skin layer (2) and a temperature of the lower shape memory polymer skin layer (3),
wherein the convection device adjusts a temperature of the gas corresponding to the first state and the second state.

9. A morphing wing comprising the shape memory morphing member (1000) according to claim 1.

10. A skin of an aircraft comprising the shape memory morphing member (1000) according to claim 1.

## Patentansprüche

1. Formgedächtnis-Formwechselelement (1000), das ein Kirigami-Muster verwendet, wobei sich das Formgedächtnis-Formwechselelement (1000) in einer Längsrichtung und einer Breitenrichtung erstreckt und umfasst:
eine obere Formgedächtnispolymer-Hautschicht (2), die sich in der Längsrichtung und der Breitenrichtung erstreckt;
eine untere Formgedächtnispolymer-Hautschicht (3), die unter der oberen Formgedächtnispolymer-Hautschicht (2) angeordnet ist und sich in der Längsrichtung und der Breitenrichtung erstreckt; und
einen Kern (1), der zwischen der oberen Formgedächtnispolymer-Hautschicht (2) und der unteren Formgedächtnispolymer-Hautschicht (3) angeordnet ist und eine Kirigami-Musterstruktur aufweist, die in der Längsrichtung und der Breitenrichtung des Formwechselelements (1000) angeordnet ist, wobei die Kirigami-Musterstruktur mehrere Kirigami-Musterreihen (11) umfasst, die sich in der Breitenrichtung erstrecken,
wobei die obere Formgedächtnispolymer-Hautschicht (2) und die untere Formgedächtnispolymer-Hautschicht (3) eine Rückstellkraft aufweisen, die die obere Formgedächtnispolymer-Hautschicht (2) und die untere Formgedächtnispolymer-Hautschicht (3) in einem ersten Zustand bei einer höheren Temperatur als einer vorbestimmten Temperatur in die ursprünglichen Formen zurückführt, die obere Formgedächtnispolymer-Hautschicht (2) und die untere Formgedächtnispolymer-Hautschicht (3) einen Freiheitsgrad der Verformung aufweisen, der einer äußeren Kraft entspricht, die mit der Rückstellkraft zu kombinieren ist, und die Formen der oberen Formgedächtnispolymer-Hautschicht (2) und der unteren Formgedächtnispolymer-Hautschicht (3) in dem ersten Zustand vor dem Umschalten in einen zweiten Zustand in dem zweiten Zustand bei einer niedrigeren Temperatur als der vorbestimmten Temperatur gehalten werden,
**dadurch gekennzeichnet, dass** sich die Kirigami-Musterreihen (11) erstrecken, während sie mehrfach gebogen sind, und Scheitel (111) und Mulden (112) aufweisen, die abwechselnd in der Breitenrichtung ausgebildet sind, und eine der mehreren Kirigami-Musterreihen (11) so ausgebildet ist, dass ein Scheitelteil der einen der mehreren Kirigami-Musterreihen (11) gelenkig mit einem Scheitelteil einer anderen Kirigami-Musterreihe (11) gekoppelt ist,
die in einer Richtung der Längenrichtung an die eine der mehreren Kirigami-Musterreihen (11) angrenzt, und ein Muldenteil der einen der mehreren Kirigami-Musterreihen (11) gelenkig mit einem Muldenteil einer anderen Kirigami-Musterreihe (11) gekoppelt ist, die in der anderen Richtung der Längenrichtung an die eine der mehreren Kirigami-Musterreihen (11) angrenzt.

2. Formgedächtnis-Formwechselelement (1000) nach Anspruch 1, wobei die obere Formgedächtnispolymer-Hautschicht (2), der Kern (1) und die untere Formgedächtnispolymer-Hautschicht (3) eine integrierte Sandwichstruktur bilden.

3. Formgedächtnis-Formwechselelement (1000) nach Anspruch 1, wobei das Formwechselelement (1000) im zweiten Zustand eine Biegesteifigkeit aufweist, die dadurch gebildet wird, dass die obere Formgedächtnispolymer-Hautschicht (2), die untere Formgedächtnispolymer-Hautschicht (3) und die Kirigami-Musterstruktur kombiniert sind.

4. Formgedächtnis-Formwechselelement (1000) nach Anspruch 1, wobei die Kirigami-Musterstruktur eine Struktur mit einem Freiheitsgrad in Bezug auf Biegeverformung, Verformung in Längsrichtung und Verformung in Breitenrichtung aufweist.

5. Formgedächtnis-Formwechselelement (1000) nach Anspruch 1, wobei die Kirigami-Musterstruktur im ersten Zustand eine Poissonzahl von Null implementiert, bei der das Formwechselelement (1000) verformt wird, indem es nur in der Längsrichtung gedehnt wird, ohne in der Breitenrichtung verformt zu werden, und eine negative Poissonzahl implementiert, bei der das Formwechselelement (1000) verformt wird, indem es sowohl in der Breitenrichtung als auch in der Längsrichtung gedehnt wird.

6. Formgedächtnis-Formwechselelement (1000) nach Anspruch 1, das ferner umfasst:
einen elektrischen Leiter, der so installiert ist, dass er eine Temperatur der oberen Formgedächtnispolymer-Hautschicht (2) und eine Temperatur der unteren Formgedächtnispolymer-Hautschicht (3) erhöht oder verringert.

7. Formgedächtnis-Formwechselelement (1000) nach Anspruch 6, wobei der elektrische Leiter auf einer inneren Oberfläche oder innerhalb der oberen Formgedächtnispolymer-Hautschicht (2) und auf einer inneren Oberfläche oder innerhalb der unteren Formgedächtnispolymer-Hautschicht (3) angeordnet ist.

8. Formgedächtnis-Formwechselelement (1000) nach Anspruch 1, das ferner umfasst:
eine Konvektionsvorrichtung, die Gas durch Konvektion zu einer Peripherie der oberen Formgedächtnispolymer-Hautschicht (2) und einer Peripherie der unteren Formgedächtnispolymer-Hautschicht (3) überträgt, um eine Temperatur der oberen Formgedächtnispolymer-Hautschicht (2) und eine Temperatur der unteren Formgedächtnispolymer-Hautschicht (3) zu erhöhen oder zu verringern,
wobei die Konvektionsvorrichtung eine Temperatur des Gases entsprechend dem ersten Zustand und dem zweiten Zustand einstellt.

9. Formwechselflügel mit dem Formgedächtnis-Formwechselelement (1000) nach Anspruch 1.

10. Außenhaut eines Flugzeugs mit dem Formgedächtnis-Formwechselelement (1000) nach Anspruch 1.

## Revendications

1. Élément déformable à mémoire de forme (1000) utilisant un motif de kirigami, l'élément déformable à mémoire de forme (1000) s'étendant dans une direction de longueur et une direction de largeur et comprenant :
une couche de peau supérieure en polymère à mémoire de forme (2) s'étendant dans la direction de longueur et la direction de largeur ;
une couche de peau inférieure en polymère à mémoire de forme (3) qui est disposée sous la couche de peau supérieure en polymère à mémoire de forme (2) et qui s'étend dans la direction de longueur et la direction de largeur ; et
un noyau (1) qui est interposé entre la couche de peau supérieure en polymère à mémoire de forme (2) et la couche de peau inférieure en polymère à mémoire de forme (3) et qui présente une structure à motifs de kirigami agencée dans la direction de longueur et la direction de largeur de l'élément déformable (1000), la structure à motifs de kirigami incluant de multiples rangées de motifs de kirigami (11) qui s'étendent dans la direction de largeur,
dans lequel la couche de peau supérieure en polymère à mémoire de forme (2) et la couche de peau inférieure en polymère à mémoire de forme (3) possèdent une force de restauration qui restaure la couche de peau supérieure en polymère à mémoire de forme (2) et la couche de peau inférieure en polymère à mémoire de forme (3) à leurs formes initiales dans un premier état à une température supérieure à une température prédéterminée, la couche de peau supérieure en polymère à mémoire de forme (2) et la couche de peau inférieure en polymère à mémoire de forme (3) présentent un degré de liberté de déformation correspondant à une force externe à combiner avec la force de restauration, et les formes de la couche de peau supérieure en polymère à mémoire de forme (2) et de la couche de peau inférieure en polymère à mémoire de forme (3) dans le premier état avant de passer à un second état sont maintenues dans le second état à une température inférieure à la température prédéterminée,
**caractérisé en ce que** les rangées de motifs de kirigami (11) s'étendent tout en étant pliées de multiples fois et présentent des crêtes (111) et des creux (112) formés alternativement dans la direction de largeur, et l'une des multiples rangées de motifs de kirigami (11) est formée de telle sorte qu'une partie crête de l'une des multiples rangées de motifs de kirigami (11) est couplée de manière articulée à une partie crête d'une autre rangée de motifs de kirigami (11) qui est adjacente à ladite une des multiples rangées de motifs de kirigami (11) dans un sens de la direction de longueur, et une partie creux de l'une des multiples rangées de motifs de kirigami (11) est couplée de manière articulée à une partie creux d'une autre rangée de motifs de kirigami (11) qui est adjacente à ladite une des multiples rangées de motifs de kirigami (11) dans l'autre sens de la direction de longueur.

2. Élément déformable à mémoire de forme (1000) selon la revendication 1, dans lequel la couche de peau supérieure en polymère à mémoire de forme (2), le noyau (1) et la couche de peau inférieure en polymère à mémoire de forme (3) constituent une structure en sandwich intégrée.

3. Élément déformable à mémoire de forme (1000) selon la revendication 1, dans lequel, dans le second état, l'élément déformable (1000) présente une rigidité en flexion formée lorsque la couche de peau supérieure en polymère à mémoire de forme (2), la couche de peau inférieure en polymère à mémoire de forme (3) et la structure à motifs de kirigami sont combinées.

4. Élément déformable à mémoire de forme (1000) selon la revendication 1, dans lequel la structure à motifs de kirigami présente une structure ayant un degré de liberté en ce qui concerne la déformation par flexion, la déformation dans la direction de longueur et la déformation dans la direction de largeur.

5. Élément déformable à mémoire de forme (1000) selon la revendication 1, dans lequel la structure à motifs de kirigami dans le premier état met en œuvre un coefficient de Poisson nul auquel l'élément déformable (1000) est déformé en étant étiré uniquement dans la direction de longueur sans être déformé dans la direction de largeur, et met en œuvre un coefficient de Poisson négatif auquel l'élément déformable (1000) est déformé en étant étiré à la fois dans la direction de largeur et la direction de longueur.

6. Élément déformable à mémoire de forme (1000) selon la revendication 1, comprenant en outre :
un conducteur électrique installé pour augmenter ou diminuer une température de la couche de peau supérieure en polymère à mémoire de forme (2) et une température de la couche de peau inférieure en polymère à mémoire de forme (3).

7. Élément déformable à mémoire de forme (1000) selon la revendication 6, dans lequel le conducteur électrique est disposé sur une surface intérieure de la couche de peau supérieure en polymère à mémoire de forme (2) ou à l'intérieur de celle-ci et sur une surface intérieure de la couche de peau inférieure en polymère à mémoire de forme (3) ou à l'intérieur de celle-ci.

8. Élément déformable à mémoire de forme (1000) selon la revendication 1, comprenant en outre :
un dispositif de convection qui transfère un gaz par convection vers une périphérie de la couche de peau supérieure en polymère à mémoire de forme (2) et une périphérie de la couche de peau inférieure en polymère à mémoire de forme (3) pour augmenter ou diminuer une température de la couche de peau supérieure en polymère à mémoire de forme (2) et une température de la couche de peau inférieure en polymère à mémoire de forme (3),
dans lequel le dispositif de convection ajuste une température du gaz correspondant au premier état et au second état.

9. Aile déformable comprenant l'élément déformable à mémoire de forme (1000) selon la revendication 1.

10. Peau d'un avion comprenant l'élément déformable à mémoire de forme (1000) selon la revendication 1.
